# FASCICULE DE BREVET EUROPEEN

(11) **EP 1 607 878 B1**
(45) Date de publication et mention de la délivrance du brevet: **21.05.2008**
(21) Numéro de dépôt: 05291267.2
(22) Date de dépôt: 13.06.2005
(51) Int. Cl.: G06F 13/28

(54) **Procédé de traitement d'une adresse virtuelle pour la programmation d'un contrôleur de DMA, système sur puce et programme d'ordinateur associés**
Verfahren zur Verarbeitung einer virtuellen Adresse zur Programmierung einer DMA Steuerung, sowie Computerprogramm und System auf Chip dafür.
Method for managing a virtual address used to program a DMA controller, computer program and system on a chip therefor.

(30) Priorité: 18.06.2004 FR 0406666
(43) Date de publication de la demande: 21.12.2005
(73) Titulaire: STMicroelectronics SA, 92120 Montrouge (FR)
(72) Inventeur: Fronte, Daniele, 13090 Aix-en-Provence (FR); Nicolai, Jean, 13790 Chateauneuf Le Rouge (FR); Martinez, Albert, 13320 Bouc Bel Air (FR)
(74) Mandataire: Verdure, Stéphane

(56) Documents cités:
- EP-A- 0 447 145
- US-A- 4 849 875
- US-A- 5 887 190
- US-A- 5 890 220

## Description

La présente invention concerne le domaine des systèmes intégrés sur silicium ou SoC (de l'anglais "System On Chip"), comprenant au moins une unité centrale de traitement ou CPU ("Central Processing Unit") sur laquelle des programmes s'exécutent, un contrôleur d'accès direct à la mémoire ou contrôleur de DMA ("Direct Memory Access"), une mémoire et une unité de gestion de mémoire.

De tels SoC sont par exemple intégrés dans des appareils électroniques tels qu'un ordinateur à usage général, un boîtier décodeur ou "Set-Top-Box", un assistant numérique personnel ou PDA ("Personal Digital Assistant"), un téléphone portable etc.

La présente invention concerne plus précisément la programmation du contrôleur de DMA d'un tel SoC.

Dans la mémoire physique, un espace mémoire de taille variable est alloué dynamiquement à chaque programme d'application ou programme utilisateur. Plus spécifiquement, chaque programme utilisateur n'a accès qu'à une partie des pages de la mémoire physique. Ces pages forment un espace mémoire (éventuellement discontinu) qui est adressé au niveau du bus mémoire par des adresses physiques, mais qui est connu du programme utilisateur via un espace d'adressage (en général continu), dit espace d'adressage virtuel auquel le programme accède avec des adresses virtuelles. L'espace d'adressage virtuel est propre au programme utilisateur. La relation qui lie les adresses virtuelles dans ledit espace d'adressage et les adresses physiques dans la mémoire physique est stockée sous la forme d'une table de traductions appelée table des pages, qui est gérée par le système d'exploitation et stockée dans la mémoire principale. Les dernières traductions d'adresses calculées par l'unité de rechargement de table de la MMU sont stockées dans une mémoire cache spécifique appelée TLB (TLB, de l'anglais "Translation Look-aside Buffer").

De façon connue, chaque entrée ("Entry" en anglais) de la TLB, i.e., chaque ligne correspondant à une traduction dans la TLB comprend un identificateur d'espace d'adressage (ou ASID, de l'anglais "Adress Space IDentifier") afin de distinguer des adresses virtuelles identiques dans des espaces d'adressage différents. Chaque ASID est respectivement associé, de manière univoque, à un espace d'adressage déterminé du système.

Le contrôleur de DMA effectue des transferts de données entre la mémoire interne du SoC et des dispositifs mémoires périphériques (par exemple, des disques), à partir d'informations qui lui sont fournies. Ces informations comportent l'adresse physique de source du transfert, l'adresse physique de destination du transfert et enfin la taille de la zone mémoire à transférer.

Dans l'art antérieur, un programme requérant une programmation du contrôleur de DMA en vue d'un transfert DMA s'exécutant sur le SoC en mode utilisateur (appelé encore mode applicatif ou mode non-privilégié) fournit une adresse virtuelle, qui est l'adresse virtuelle de la source du transfert DMA ou de la destination du transfert DMA, au système d'exploitation ou OS ("Operating System"). L'OS, s'exécutant en mode privilégié (appelé encore mode superviseur ou mode noyau) prend alors la main, traduit l'adresse virtuelle fournie en une adresse physique correspondante. Il requiert successivement la mémorisation de l'adresse physique de source du transfert obtenue dans le registre de source, la mémorisation de l'adresse de destination dans le registre de destination et enfin la mémorisation de la taille dans le registre de taille, et ce à partir de l'adresse virtuelle des registres. L'OS supervise ensuite le transfert réalisé par le contrôleur de DMA à partir des informations figurant dans ses registres et avertit le programme initiateur de la requête, du résultat du transfert.

Les instructions de mémorisation utilisées généralement sont du type : "STORE pa_src@dma_src_reg_adr", "STORE pa_dest@dma_dest_reg_adr" et "STORE size@dma_size_reg_adr", où "pa_src" est l'adresse physique de source, "pa_dest" est l'adresse physique de destination, "size" est la taille de la zone mémoire transférée, "dma_src_reg_adr", "dma_dest_reg_adr" et "dma_size_reg_adr" sont respectivement les adresses virtuelles des registres de source, de destination et de taille. La première instruction ci-dessus signifie en langage naturel « mémoriser la donnée correspondant à l'adresse physique de source "pa_src" dans le registre d'adresse de source du contrôleur de DMA dont l'adresse virtuelle est "dma_src_reg_adr" ». Cette instruction fournit donc un argument d'adresse virtuelle "dma_src_reg_adr" et un argument de données "pa_src" à stocker à l'adresse fournie comme argument d'adresse.

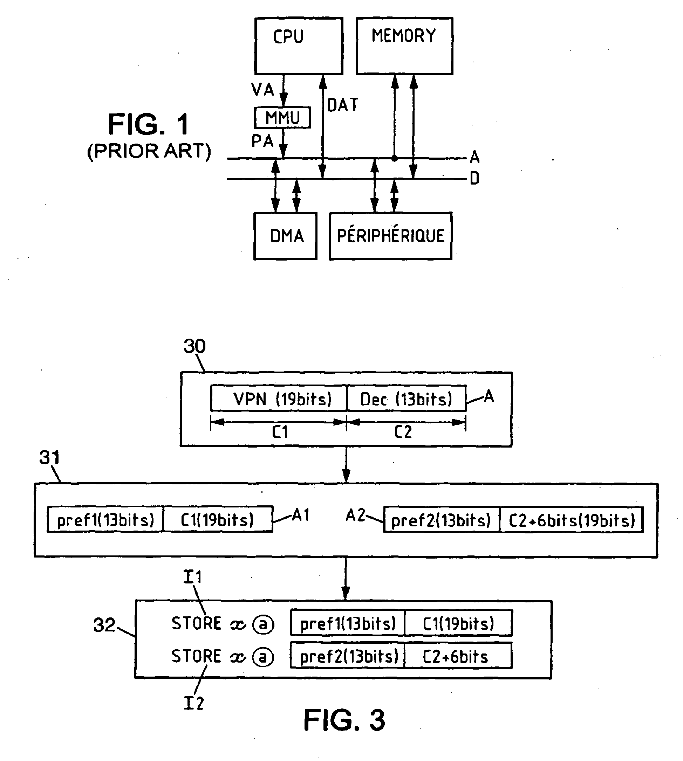

En référence à la figure 1 représentant schématiquement un exemple de SoC tel que considéré précédemment, le cheminement d'une programmation du contrôleur de DMA suivant l'art antérieur est le suivant : l'adresse virtuelle "dma_src_reg_adr" est appliquée par la CPU à destination de la MMU sur le bus d'adresses virtuelles VA. La MMU la traduit en adresse physique, vérifie les droits d'accès à cette adresse physique, puis l'applique sur le bus d'adresse physiques PA, par lequel elle est mise à disposition notamment du contrôleur de DMA sur le bus général A qui est relié à un ensemble d'entités comprenant par exemple des contrôleurs de disques, la mémoire physique etc.

En parallèle, l'adresse physique de source "pa_src" est appliquée par la CPU sur le bus de données DAT, à partir duquel elle est mise à disposition sur le bus général de données D relié également à l'ensemble d'entités.

La traduction est effectuée par la MMU à l'aide d'une table de traduction.

Plusieurs tentatives ont été récemment effectuées pour programmer le contrôleur de DMA directement par un programme s'exécutant en mode utilisateur, et non plus par l'OS. Ce besoin provient notamment de la proportion très importante du temps requis pour une programmation de contrôleur de DMA par l'OS, par rapport au temps du transfert lui-même des données opéré par le contrôleur de DMA.

Une des difficultés rencontrées provient du fait que les registres du contrôleur de DMA doivent être programmés avec des adresses physiques, alors que les programmes en mode utilisateur n'y ont pas accès et qu'il n'est pas souhaitable, notamment pour des raisons de sécurité, qu'ils y aient accès.

Des solutions sont proposées dans les documents « User-Level DMA without Operating System Kernel Modification », de Evangelos P. Markatos et Manolis G.H. Katevenis, Institute of Computer Science, Science and Technology Park of Crete, 1997 IEEE, « Protected User-Level DMA for the Shrimp Network Interface », de M.A. Blumrich et al., Proc of the 2nd International Symposium on High Performance Computer Architecture, pages 154-165, February 1996 et « Integration of Message Passing and Shared Memory in the Stanford Flash Multi-Processor », de J. Heinlein et al., Proc. Of the 6th International Conference on Architectural Support for Programming Languages and Operating Systems, pages 38-50, 1994.

Selon ces solutions, le programme utilisateur exécute une instruction de mémorisation existante de type de l'instruction STORE évoquée ci-dessus, mais place comme argument d'adresse l'adresse virtuelle de source ou de destination qu'il désire programmer dans le contrôleur de DMA, et non l'adresse du registre du contrôleur de DMA à programmer. Ceci a pour effet de forcer la MMU à traduire l'adresse virtuelle fournie, de source ou de destination, en adresse physique correspondante. Cette technique permet en outre à la MMU de contrôler que le programme utilisateur a bien le droit d'accéder à cette adresse.

Deux difficultés supplémentaires ont dû être prises en compte. Tout d'abord, il faut faire en sorte que le contrôleur de DMA recueille cette adresse physique qui se trouve sur le bus d'adresses A, et l'écrive comme une donnée dans son registre de source ou de destination. Par ailleurs, il faut également permettre que la zone mémoire à laquelle l'adresse physique appliquée sur le bus correspond, ignore l'instruction "STORE" car elle ne lui est pas adressée.

Le document cité ci-dessus permet de fournir une solution à ces problèmes. Cette solution consiste à mettre à 1 le bit le plus significatif (bit de plus fort poids ou MSB) de l'adresse de source ou de destination d'un transfert DMA avant qu'elle ne soit fournie à la MMU. Ainsi le contrôleur de DMA recueille à l'aide de sa machine d'état adaptée, comme une donnée à mémoriser dans un de ses registres, tout mot comportant un MSB à 1.

Cette solution réalise donc un adressage implicite (ou "shadow adressing"), basé sur l'instruction de mémorisation "STORE" et le préfixe 1.

L'inconvénient de cette technique est que le système ne doit comporter aucune zone mémoire ou dispositif périphérique dont l'adresse commence par 1, ce qui divise par deux l'espace mémoire adressable réellement disponible. Ainsi pour un système 32 bits (soit 4 Go), l'espace mémoire adressable en pratique est réduit de moitié, à 2^31 bits (soit 2 Go), ce qui est très pénalisant.

La présente invention vise à pallier cet inconvénient de l'art antérieur.

A cet effet, suivant un premier aspect, l'invention propose un procédé de traitement d'une adresse virtuelle par un processus tel qu'énoncé en revendication 1.

Ce procédé est avantageusement mis en oeuvre dans un programme utilisateur. Un tel procédé permet de réduire l'espace disponible de manière bien moins importante que dans les solutions de l'art antérieur, tout en préservant le fait que le programme utilisateur ne manipule pas les adresses physiques, et que la MMU effectue bien une vérification des droits du programme lors de sa demande de programmation du contrôleur de DMA.

Suivant un second aspect, l'invention propose un programme d'ordinateur comportant une programmation de contrôleur de DMA à partir d'une adresse virtuelle de source ou une adresse virtuelle de destination, ayant une taille de N bits. Le programme d'ordinateur est adapté pour s'exécuter en mode utilisateur sur un système sur une puce comportant une unité centrale de traitement, une unité de gestion de mémoire et un contrôleur de DMA. Il comprend des instructions pour mettre en oeuvre les étapes d'un procédé suivant le premier aspect de l'invention.

Suivant un troisième aspect, l'invention propose un système sur une puce tel qu'énoncé en revendication 10.

Le remplissage des registres de source, destination et taille se fait successivement et toujours selon la même séquence. La machine d'état recevant une information sait donc dans quel type de registre la stocker.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation d'un système sur puce de l'art antérieur ;
- la figure 2 représente un système sur puce selon un mode de réalisation de l'invention ;
- la figure 3 est une représentation des différentes étapes mises en oeuvre par un programme utilisateur à partir d'une adresse virtuelle, dans un mode de réalisation de l'invention.

On considère dans le mode de réalisation ci-après décrit un système sur une puce 1 avec une architecture standard à N bits, dans laquelle une adresse virtuelle se présente sous la forme d'un nombre formant adresse virtuelle de page codée sur les p bits de poids fort ou VPN (en anglais "Virtual Page Number"), suivie par un décalage (en anglais "offset ") dans ladite page codé sur les bits de poids faible.

L'architecture considérée par la suite est à 32 bits et utilise des pages de 8 kilooctets. L'invention peut toutefois être mise en oeuvre dans tout type d'architecture comportant des pages de toute dimension.

Chaque adresse virtuelle considérée ici comporte donc 19 premiers bits de poids fort (p=19) indiquant la page. Ce VPN est suivi de 13 bits de poids faible indiquant le décalage.

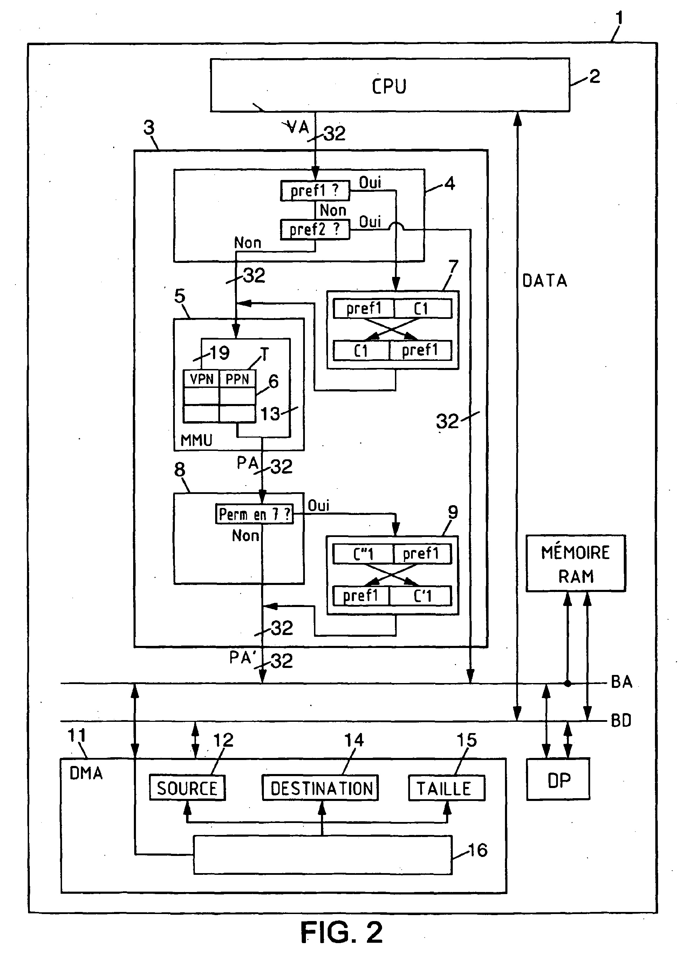

Le système sur puce 1 représenté sur la figure 2 et correspondant à un mode de réalisation de l'invention, comprend une unité centrale de traitement ou CPU 2. Il comprend également un bloc de traitement d'adresses 3, qui est relié à la CPU 2 par un bus d'adresses virtuelles VA.

Le bloc 3 comprend un premier bloc logique 4 adapté pour fournir sélectivement un mot d'adresse de 32 bits fourni en entrée à différents entités du SoC, en fonction de la présence dans le mot, d'un préfixe de valeur pref1 ou pref2 dans les bits de plus fort poids du mot. Le bloc 3 comprend en outre une unité de gestion de mémoire ou MMU 5, deux modules de permutation 7 et 9, et un second bloc logique 8.

Le fonctionnement du bloc logique 4 est le suivant : si dans un mot reçu par le bloc logique 4, les bits de plus fort poids sont égaux à pref1, alors le mot est délivré au module de permutation 7. Si dans un mot reçu par le bloc logique 4, les bits de plus fort poids sont égaux à pref2, alors le mot est délivré directement au bus général d'adresses BA. Sinon, le mot est fourni à la MMU 5.

De façon standard, la MMU 5 traduit une adresse virtuelle de 32 bits qui lui est fournie en entrée, en réalisant la traduction des bits de plus fort poids uniquement indiquant la page (ici les 19 premiers bits), soit la traduction du VPN en numéro de page physique ou PPN (en anglais "Physical Page Number"), à l'aide d'une table T prédéterminée. La MMU 5 vérifie également que l'application à l'origine de la traduction possède bien les droits correspondants.

Le module de permutation 7 permute un nombre N-p de bits de poids fort ( ici 13) d'une adresse de 32 bits fournie en entrée avec les p (soit ici 19) bits de poids faible et délivre l'adresse résultante à la MMU 5 pour traduction.

Le second bloc logique 8 est relié à la MMU 5 par un bus d'adresses physiques PA. Il est adapté pour fournir sélectivement un mot d'adresse physique qui lui est fourni en entrée, à différents entités du SoC, s'il y a eu détection de la valeur pref1 dans le bloc 4, suivie d'une permutation dans le bloc 7 sur le mot d'adresse virtuelle dont est issu le mot d'adresse physique . Son fonctionnement est le suivant. Si le bloc 7 vient d'effectuer une permutation, alors l'adresse physique sortant de la MMU est délivrée à un module de permutation 9. Sinon, elle est délivrée au bus général d'adresses BA..

Le bloc de permutation 9 permute les p (ici 19) bits de poids fort d'une adresse de 32 bits fournie en entrée avec les N-p (ici 13) bits de poids faible.

Les mots d'adresse traités par le bloc de traitement 3 sont délivrés par un bus PA' au bus d'adresses général BA.

Le système sur puce 1 comprend en outre un contrôleur de DMA 11, qui comporte un registre de source 12, un registre de destination 14 et un registre de taille 15. Il comprend également une machine d'états 16 adaptée pour détecter la présence dans les bits de poids fort d'un mot d'adresse présent sur le bus BA, du préfixe pref1 ou du préfixe pref2, et pour mémoriser dans les registres, des données issues de tels mots. Dans le mode de réalisation particulier ici considéré, le fonctionnement de la machine d'états 16 est le suivant. Elle remplit, pour un même programme de transfert DMA, avec ces données, d'abord un registre de source, puis, le registre de destination, et enfin le registre de taille.

Elle est adaptée pour, lorsque les bits de poids fort d'un mot reçu dans le cadre d'un programme donné de transfert DMA, sont égaux au préfixe de valeur pref1, mémoriser les 19 derniers bits du mot reçu dans les bits de poids fort du registre de source ou de destination en cours de remplissage. Et quand les bits de poids fort d'un mot reçu sont égaux au préfixe de valeur pref2, mémoriser les 13 bits suivant le préfixe dans le mot reçu, comme bits de poids faible du registre en cours de remplissage. Une fois le registre ainsi rempli, la machine d'états passe en cas de réception de données relatif au programme précédent, au remplissage du prochain registre à remplir (suivant la séquence source/destination/taille).

Le bus d'adresses général BA interconnecte le bloc 3, le contrôleur de DMA 11, la CPU 2, des dispositifs périphériques DP, une mémoire RAM etc.

De la même façon, un bus de données BD interconnecte ces différentes entités.

Les nombres (13,19,32) apparaissant à proximité des bus de liaison sur la figure 2 indiquent le nombre de bits des mots transitant sur ces bus.

Dans un mode de réalisation de l'invention, un programme utilisateur P s'exécute en mode utilisateur dans le SoC 1. Il requiert une programmation du contrôleur de DMA afin d'effectuer un transfert. Un tel programme P est par exemple un pilote (en anglais "driver") DMA. Etant donné que certains drivers DMA peuvent maintenant être téléchargés sur Internet et sont par conséquent susceptibles d'être corrompus, on les fait s'exécuter en mode utilisateur et non plus en mode privilégié.

Le programme P, à l'étape référencée 30 à la figure 3, découpe une adresse virtuelle A de source de transfert DMA en deux champs C1 et C2. Le premier champ C1 comporte les 19 bits de poids fort indiquant la page VPN1. Le second champ C2 comporte les 13 bits de poids faibles indiquant le décalage.

Dans une étape 31, le programme utilisateur P crée un premier mot A1 de 32 bits comprenant un préfixe de 13 bits ayant une première valeur pref1, suivi du champ C1 de 19 bits. Il crée également un second mot A2 de 32 bits comprenant un préfixe de 13 bits ayant une seconde valeur pref2 (différent de pref1 dans le mode de réalisation considéré), suivi du champ C2, complété de 6 bits quelconques de poids faible.

Les valeurs pref1 et pref2 ont été déterminées lors d'une étape préalable de définition des règles de programmation DMA.

Dans une étape 32, le programme utilisateur effectue une programmation de contrôleur de DMA à l'aide de deux instructions de mémorisation successives comportant les arguments d'adresse et de données suivants :
instruction I1 STORE x @ A1 ; et
instruction I2 : STORE x @ A2.

L'information x peut, dans des modes de réalisation, être un identifiant du programme utilisateur P, c'est-à-dire que l'ensemble des instructions de mémorisation effectuées pour un transfert DMA requis par un même programme utilisateur et relatives à la mémorisation des informations de source, de destination et de taille vont comporter le même identifiant x.

Ces instructions sont ensuite traitées séquentiellement, ainsi qu'il va maintenant être expliqué en référence à la figure 2, par la CPU 2.

La CPU 2, traitant chacune de ces instructions, délivre l'information x sur le bus de données BD par l'intermédiaire du bus de données DATA.

D'autre part, l'adresse A1, puis l'adresse A2, sont envoyées successivement par la CPU 2 au bloc logique d'acheminement 4 du bloc de traitement 3, lors du traitement de l'instruction I1, puis de l'instruction 12.

Comme l'adresse virtuelle A1 comporte un préfixe ayant la valeur pref1, elle est délivrée par le bloc d'acheminement 4 au module de permutation 7, qui délivre en sortie le mot d'adresse virtuelle A1' à la MMU 5.

Le mot d'adresse A1', comportant 32 bits, comprend ainsi comme bits de poids le plus fort les 19 bits du VPN issu du mot A1, qui sont suivis des bits du préfixe de valeur pref1.

Dans la MMU 5, le mot A1' est traduit en un mot A1" conformément à la table T, en fonction des 19 bits de poids fort.

Le mot d'adresse A1", comportant 32 bits, comprend ainsi comme bits de poids le plus fort, les 19 bits du PPN1 fourni par la table, et comme bits de plus faible poids bits, ceux codant la valeur pref1 du préfixe.

Puis le mot d'adresse A1" est fourni par l'intermédiaire du bus PA au bloc logique 8, qui, sachant que le bloc 7 a effectué une permutation, délivre A1" au module de permutation 9. Ce module de permutation 9 délivre sur le bus BA un mot A1''' qui comprend 13 bits de plus fort poids égaux au préfixe de valeur pref1, et 19 bits de plus faible poids égaux à PPN1.

Concernant l'adresse virtuelle A2 délivrée par la CPU 2 au bloc de traitement 3, comme elle comporte des bits de plus fort poids correspondant au codage de la valeur pref2, elle est délivrée par le bloc d'acheminement 4 directement au bus d'adresses général BA, par exemple par un équipement de dérivation (en anglais " by-pass").

La machine d'états 16 du contrôleur de DMA 11 va détecter la présence de pref1 dans les bits de plus fort poids de A1"' présent sur le bus BA et va ainsi remplir les 19 premiers bits du registre de source avec PPN1 ; puis elle va détecter la présence de pref2 dans les bits de plus fort poids de A2 lors de son application sur le bus BA et va remplir les 13 bits suivant PPN1 dans le registre de source, avec le champ C1 correspondant au décalage.

La programmation du registre de source du contrôleur de DMA est ainsi effectuée.

Le remplissage du registre de destination se déroule de façon similaire à celle présentée ci-dessus pour le registre de source.

Les informations pour remplir le registre de taille peuvent être fournies par une instruction de l'art antérieur du type STORE size @ dma_size_reg_adr. La machine d'états 16 sera avertie par la présence sur le bus BA des données d'adresse physique correspondant à l'adresse virtuelle dma_size_reg, que des données présentes sur le bus de données BD sont à stocker dans le registre de taille.

Par ailleurs, dans un mode de réalisation, l'argument de données x fourni au contrôleur de DMA sur le bus BD parallèlement à la transmission sur le bus général d'adresses BA, de l'adresse de source et également parallèlement à la transmission sur le bus BA de destination, est adapté pour permettre à la machine d'états de garantir l'atomicité des différentes instructions correspondant à une même programmation du contrôleur de DMA comportant une adresse de source, une adresse de destination et une taille. Cette caractéristique lui permet notamment, lorsqu'elle a la possibilité de renseigner en parallèle plusieurs triplets de registres de type source, destination et taille pour plusieurs programmes, de renseigner les bons registres. Dans ce cas, la machine d'états choisit le triplet de registres à remplir, lors de la réception d'informations sur le bus d'adresses général, en fonction de l'argument x présent simultanément sur le bus de données général.

Dans un mode de réalisation, x sera pris égal à l'ASID.

Par rapport à la méthode d'adressage implicite selon l'art antérieur, la détection par la machine d'états du contrôleur de DMA ne se fait plus sur la valeur d'un seul bit à 1, mais sur la présence de deux préfixes ici de 13 bits. Par rapport au fonctionnement selon l'art antérieur, il y a au niveau de la machine d'états, deux étapes, et non une seule pour remplir un registre.

Par ailleurs, les blocs logiques 4 et 8 peuvent être réalisés par un premier dispositif de commande logique détectant le préfixe de valeur pref1 et commandant en fonction les deux blocs de permutation 7 et 9, et par un second dispositif de commande logique détectant le préfixe de valeur pref2 et commandant en fonction le by-pass.

Dans des modes de réalisation, les composants correspondant au bloc logique 4 pourront être intégrés au composant dans lequel est réalisée la CPU 2, ou encore au composant dans lequel est réalisée la MMU 5 .

Dans des modes de réalisation, les composants correspondant au bloc logique 8 pourront être intégrés au composant dans lequel est réalisée la MMU 5, ou encore au composant dans lequel est réalisée le bus d'adresses physiques PA'.

Ainsi il apparaît du mode de réalisation présenté ci-dessus, que l'invention permet de réaliser une programmation de contrôleur de DMA ne laissant pas le programme utilisateur P manipuler des adresses physiques et permettant en outre un contrôle des droits qu'il détient par la MMU. Le programme P n'a pas directement accès aux registres du contrôleur de DMA et ne peut donc y écrire ce qu'il souhaite. Par rapport aux techniques d'adressage implicite de l'art antérieur, il permet de perdre beaucoup moins d'espace disponible. En effet, dans le cas présenté ci-dessus, avec deux préfixes pref1 et pref2 distincts, on perd 2x2^19 emplacements mémoires, ce qui est bien inférieur à la perte selon les techniques d'adressage implicite réalisées conformément à l'art antérieur.

L'invention permet en outre de ne pas provoquer de ralentissement significatif des traitements réalisés par la MMU 5 sur des adresses non destinées au contrôleur de DMA.

L'invention ne nécessite pas la création de nouvelles instructions. Elle utilise une instruction existante deux fois (ou plus, si on découpe en plus de deux champs) quand dans l'art antérieur on ne l'utilisait qu'une fois, pour programmer une adresse de source (ou de destination).

Le mode de réalisation présenté ci-dessus est particulièrement avantageux, puisqu'il permet d'utiliser un système sur puce composé d'une CPU, d'une MMU et d'un contrôleur de DMA standards, et comportant simplement quelques composants supplémentaires (deux dispositifs de permutation, un by-pass) et une machine d'états de contrôleur de DMA adaptée.

Dans un autre mode de réalisation, on utilisera une seule valeur de préfixe, c'est-à-dire pref1 sera égal à pref2. Le système sur puce sera alors adapté pour traiter un premier mot reçu pour une programmation du contrôleur de DMA présentant le préfixe unique comme indiqué ci-dessus pour A1, et pour traiter comme indiqué pour A2 ci-dessus, le mot arrivant pour une programmation du contrôleur de DMA après ce premier mot. Dans ce cas, il n'y a plus besoin de mécanisme de détection de deuxième valeur de préfixe, ni de by-pass. On traite l'arrivée du premier mot avec le préfixe, comme mot présentant un préfixe ayant la première valeur et on traite l'arrivée du second mot présentant le préfixe, comme mot présentant un préfixe ayant la seconde valeur.

Par ailleurs, dans le mode de réalisation décrit en référence aux figures 2 et 3, une adresse virtuelle A de source ou de destination donne lieu à deux instructions de mémorisation implicite avec comme arguments d'adresse deux mots d'adresse A1 et A2 créés en fonction de A. Dans d'autres modes de réalisation, on découpe l'adresse A en un nombre de champs supérieur à 2. Le nombre de préfixes pourra alors être plus grand que 2 également. On exécutera autant d'instructions implicites que de champs. Chaque instruction comportera comme argument d'adresse, un mot de N bits (si l'architecture est à N bits) créé à partir d'un préfixe et d'un champ éventuellement complété par d'autres bits. De la sorte, un ou des préfixes utilisés pourront comporter un nombre de bits plus grands que la taille du décalage ; la perte d'espace mémoire sera encore réduite. Cependant, les modifications à apporter aux composants standards (MMU, CPU, bus, contrôleur de DMA) du SoC seront plus importantes, notamment pour procéder à la reconstruction dans les registres du mot traduit. Et si le VPN ne se retrouve pas entier dans un des mots créés, il faudra un dispositif pour reconstruire le VPN avant de le faire traduire par la MMU.

Dans le mode de réalisation décrit en référence aux figures 2 et 3, les champs sont insérés de manière compacte juste après le préfixe. Dans d'autres modes de réalisation, le placement des bits du champ dans le mot crée peut être différent. Le SoC et la machine d'états du contrôleur de DMA sont à adapter en conséquence.

Dans un autre mode de réalisation où le découpage par le programme utilisateur est similaire à celui décrit en référence aux figures par le programme P, le SoC peut comporter une MMU spécifique vers laquelle on dirige les mots crées comportant le VPN, par exemple A1 et qui est conçue pour traduire directement de tels mots. Elle effectuera les traductions conformément à la table T utilisée par la MMU 5, mais prendra en considération pour ce faire les 19 derniers bits, et non les 19 premiers bits du mot en entrée. Les moyens de permutation ne sont alors plus utiles et le mot d'adresse A1 n'a alors plus besoin d'être fourni à être fourni à la MMU standard 5.

## Revendications

1. Procédé de traitement d'une adresse virtuelle (A) par un processus (P) comportant une programmation de contrôleur de DMA et adapté pour s'exécuter en mode utilisateur sur un système sur puce (1) comportant une unité centrale de traitement (2), une unité de gestion de mémoire (5) et un contrôleur de DMA (11), ladite adresse virtuelle étant une adresse parmi une adresse virtuelle de source et une adresse virtuelle de destination et ayant une taille de N bits, ledit procédé comprenant les étapes suivantes :
- on découpe l'adresse virtuelle en au moins deux champs de bits (C1, C2);
- pour chaque champ, on crée un mot d'adresse (A1, A2) de N bits, comprenant d'une part un préfixe (pref1, pref2) de valeur donnée associé au champ et comportant un nombre de bits strictement supérieur à 1 et d'autre part ledit champ;
- on effectue une programmation du contrôleur de DMA à l'aide d'instructions de mémorisation (I1, I2) et comportant, pour chacun des mots d'adresse créés, une instruction de mémorisation respective relative audit mot d'adresse.

2. Procédé selon la revendication 1, selon lequel ladite adresse virtuelle comporte un nombre p de premiers bits qui déterminent une page suivis d'un nombre N - p de bits qui déterminent un décalage dans ladite page.

3. Procédé selon la revendication 2, selon lequel on découpe l'adresse virtuelle en deux champs (C1, C2), un premier champ de l'adresse virtuelle comportant au moins les p bits déterminant la page et un second champ de l'adresse virtuelle comportant au moins les N-p bits déterminant le décalage ; et selon lequel :
- on crée un premier mot d'adresse (A1) de N bits constitué d'un préfixe ayant une première valeur donnée (pref1) et du premier champ (C1) ;
- on crée un second mot d'adresse (A2) de N bits comprenant un préfixe ayant une seconde valeur donnée (pref2) et le second champ (C2) ;
- on effectue une programmation du contrôleur de DMA à l'aide d'au moins une première instruction de mémorisation (I1) relative au premier mot d'adresse, et d'une seconde instruction de mémorisation (I2) relative au second mot d'adresse.

4. Procédé selon la revendication 2 ou la revendication 3, selon lequel une instruction de mémorisation est une instruction comportant un argument de données (x) destiné à être placé sur un bus de données (data) et un argument d'adresses destiné à être placé sur un bus d'adresses (VA), et l'argument d'adresses de l'Instruction de mémorisation comprend un mot d'adresse (A1, A2) créé débutant par l'un des préfixes (pref1, pref2) et comprenant l'un des champs (C1, C2) après le préfixe.

5. Procédé selon l'une quelconque des revendications précédentes, selon lequel une instruction de mémorisation (I1,I2) relative à un mot d'adresse créé (A1, A2) comprenant l'un des préfixes (pref1, pref2) et l'un des champs (C1, C2), est une instruction de mémorisation de type à adressage implicite basée sur ledit préfixe.

6. Procédé selon l'une quelconque des revendications 3 à 5, selon lequel le premier champ (C1) est constitué exclusivement des p bits déterminant la page.

7. Procédé selon l'une quelconque des revendications 3 à 5, selon lequel le second champ (C2) est constitué exclusivement des N-p bits déterminant le décalage.

8. Procédé selon l'une quelconque des revendications précédentes, selon lequel on utilise pour chaque champ le même préfixe.

9. Programme d'ordinateur (P) comportant une programmation de contrôleur de DMA à partir d'une adresse virtuelle (A) parmi une adresse virtuelle de source et une adresse virtuelle de destination, ayant une taille de N bits, ledit programme d'ordinateur étant adapté pour s'exécuter en mode utilisateur sur un système sur puce (1) comportant une unité centrale de traitement (2), une unité de gestion de mémoire (5) et un contrôleur de DMA (11), ledit programme comprenant des instructions pour mettre en oeuvre les étapes d'un procédé selon l'une quelconque des revendications précédentes.

10. Système sur puce (1) comprenant:
- une unité centrale de traitement (2) adaptée pour, lors de l'exécution en mode utilisateur d'une instruction de mémorisation (I1, I2) comportant au moins un argument d'adresses (A1, A2), fournir l'argument d'adresses à un bloc de traitement d'adresses (3) par l'intermédiaire d'un premier bus d'adresses (VA),
- le bloc de traitement d'adresse (3) comprenant :
- un premier module (7) adapté pour réaliser des traitements sur des mots d'adresse (A1) ayant une première valeur de préfixe (pref1) codée sur un nombre de bits strictement supérieur à 1,
- une unité de gestion de mémoire (5), adaptée pour traduire conformément à une table déterminée (T), un mot d'adresse virtuelle (A1') comportant N bits fourni en entrée en un mot d'adresse physique correspondant (A1 "),
- des moyens d'acheminement (4) adaptés pour détecter au moins la première valeur de préfixe (pref1) et une seconde valeur de préfixe donnée (pref2) codée sur un nombre de bits strictement supérieur à 1, dans un mot d'adresse virtuelle (A1, A2) fourni en entrée et pour fournir sélectivement le mot d'adresse à un élément sélectionné parmi l'unité de gestion de mémoire (5), le premier module (7) du bloc de traitement d'adresse et un second bus d'adresses (BA),
ledit bloc de traitement d'adresse (3) étant adapté en outre pour, à partir d'un mot d'adresse virtuelle (A1) fourni en entrée et comportant un préfixe ayant la première valeur, délivrer en sortie un mot d'adresse (A1"') comportant un préfixe ayant la première valeur et des bits obtenus suite à une opération de traduction d'adresse virtuelle en adresse physique correspondante (A1") conformément à la table déterminée, l'adresse virtuelle à traduire (A1') étant déterminée au moins en partie en fonction de bits situés après ledit préfixe dans ledit mot d'adresse virtuelle (A1) fourni en entrée ;
ledit bloc de traduction d'adresse étant en outre adapté pour fournir les mots traités au second bus d'adresses (BA) ;
- un contrôleur de DMA (11) qui comprend un registre (12) d'adresse de source, un registre (14) d'adresse de données, un registre (15) de taille et une machine d'états (16), ladite machine d'états étant adaptée pour détecter au moins un préfixe ayant la première valeur (pref1), respectivement un préfixe ayant la seconde valeur (pref2), dans un mot d'adresse (A1, A2) mis à disposition sur le second bus d'adresses (BA), et pour mémoriser dans un registre choisi parmi le registre de source et le registre de destination, au moins des bits extraits d'un premier emplacement dans un mot d'adresse comportant un préfixe ayant la première valeur, et des bits extraits d'un second emplacement dans un mot d'adresse comportant un préfixe ayant la seconde valeur, ledit premier, respectivement second, emplacement étant déterminé et situé après lesdits préfixes respectifs.

11. Système sur puce (1) selon la revendication 10, dans lequel l'unité de gestion de mémoire (5) est adaptée pour traduire un mot d'adresse virtuelle (A1') fourni en entrée en un mot d'adresse physique correspondant (A1") en fonction d'un nombre p de premiers bits du mot d'adresse virtuelle qui déterminent une page.

12. Système sur puce (1) selon la revendication 11, dans lequel la machine d'états (16) du contrôleur de DMA (11) est adaptée pour extraire un nombre p de bits suivant le préfixe d'un mot d'adresse (A1 "') dont ledit préfixe présente la première valeur (praf1).

13. Système sur puce (1) selon la revendication 11 ou la revendication 12, dans lequel la machine d'états (16) du contrôleur de DMA (11) est adaptée pour extraire un nombre N-p de bits suivant le préfixe d'un mot d'adresse (A2) dont ledit préfixe présente la seconde valeur (pref2).

14. Système sur puce (1) selon l'une quelconque des revendications 10 à 13, dans lequel le premier module (7) comprend des premiers moyens de permutation adaptés pour permuter le groupe constitué des N-p premiers bits d'un mot d'adresse virtuelle fourni en entrée avec le groupe constitué des p bits suivants dudit mot d'adresse virtuelle, et pour fournir le mot (A1') d'adresse virtuelle résultant à l'unité de gestion de mémoire (5).

15. Système sur puce (1) selon la revendication 14, dans lequel le bloc de traitement d'adresses (3) comprend un second module (8) auquel sont adressés les mots (A1") d'adresse physique résultant de la traduction de mots d'adresse virtuelle respectifs correspondants par l'unité de gestion de mémoire (5), ledit second module comprenant des moyens pour déterminer si une permutation a été effectuée par les premiers moyens de permutation (7) sur le mot d'adresse virtuelle correspondant au mot d'adresse physique en entrée, et des seconds moyens de permutation (9) pour permuter le groupe constitué des p premiers bits avec le groupe constitué des N-p suivants dans un mot (A1") fourni par le second module en cas de détermination d'une permutation par le second module et pour mettre à disposition le mot d'adresse résultant (A1''') sur le second bus d'adresses (BA).

16. Système sur puce (1) selon l'une quelconque des revendications 10 à 15, dans lequel l'unité de gestion de mémoire (5) et l'unité centrale de traitement (2) sont comprises dans des composants respectifs, et au moins un élément parmi le premier module (7) et les moyens d'acheminement (4) est au moins partiellement intégré à un composant parmi le composant comprenant l'unité de gestion de mémoire et le composant comprenant l'unité centrale.

17. Système sur puce (1) selon l'une quelconque des revendications 15 à 16, dans lequel l'unité de gestion de mémoire (5) et un troisième bus d'adresses (PA') sont compris dans des composants respectifs, et au moins un élément parmi le second module (8) et les seconds moyens de permutation (9) est au moins partiellement intégré à un composant parmi le composant comprenant ledit troisième bus et le composant comprenant l'unité de gestion de mémoire (5).

18. Système sur puce (1) selon l'une quelconque des revendications 10 à 17, dans lequel les moyens d'acheminement (4) comprennent un dispositif de dérivation adapté pour fournir un mot d'adresse fourni en entrée directement au second bus d'adresses (BA) en cas de détection de la seconde valeur de préfixe.

19. Système sur puce (1) selon l'une quelconque des revendications 10 à 13, dans lequel le premier module (7) du bloc de traitement d'adresses (3) comprend une unité de gestion de mémoire spécifique, ladite unité de gestion de mémoire spécifique est adaptée pour, à partir d'un mot d'adresse virtuelle (A1) fourni en entrée comportant un préfixe ayant la première valeur, délivrer un mot d'adresse comportant un préfixe ayant la première valeur et des bits obtenus suite à une opération de traduction d'adresse virtuelle en adresse physique correspondante conformément à la table déterminée (T), l'adresse virtuelle à traduire étant déterminée au moins en partie en fonction de bits déterminés dudit mot d'adresse virtuelle fourni en entrée qui sont situés après ledit préfixe.

20. Système sur puce (1) selon l'une quelconque des revendications 10 à 19, dans lequel la machine d'états (16) du contrôleur de DMA (11) est adaptée pour sélectionner le registre pour la mémorisation en fonction au moins d'une information (x) appliquée par l'unité centrale de traitement (2) sur un bus de données (BD) reliant le contrôleur de DMA et l'unité centrale de traitement (2).

## Claims

1. Method for processing a virtual address (A) by a process (P) comprising programming of a DMA controller and designed to be run in user mode on a system on a chip (1) comprising a central processing unit (2), a memory management unit (5) and a DMA controller (11), said virtual address being an address taken from a source virtual address and a destination virtual address and having a size of N bits, said method being **characterized in that** it comprises the following steps:
- dividing the virtual address into at least two bit fields (C1, C2);
- for each field, creating an N-bit address word (A1, A2), comprising on the one hand a prefix (pref1, pref2) of a given value associated with the field and including a number of bits strictly greater than 1 and on the other hand said field;
- programming the DMA controller using store instructions (11, 12) and including, for each of the address words created, a store instruction relating to said address word.

2. Method according to Claim 1, wherein said virtual address comprises a number p of first bits which determine a page followed by a number N - p of bits which determine an offset in said page.

3. Method according to Claim 2, wherein the virtual address is divided into two fields (C1, C2), a first field of the virtual address comprising at least the p bits determining the page and a second field of the virtual address comprising at least the N-p bits determining the offset; and wherein
- a first N-bit address word (A1) is created made of the first field (C1) and a prefix having a first given value (pref1) ;
- a second N-bit address word (A2) is created including the second field (C2) and a prefix having a second given value (pref2) ;
- the DMA controller is programmed using at least a first store instruction (11) relating to the first address word, and a second store instruction (12) relating to the second address word.

4. Method according to Claim 2 or Claim 3, wherein a store instruction is an instruction including a data argument (x) intended to be placed on a data bus and an address argument intended to be placed on an address bus (VA), and the address argument of the store instruction includes an address word (A1, A2) created beginning with one of the prefixes (pref1, pref2) and including one of the fields (C1, C2) after the prefix.

5. Method according to any of the preceding claims, wherein a store instruction (I1, I2) relating to an address word created (A1, A2) including one of the prefixes (pref1, pref2) and one of the fields (C1, C2), is a store instruction of the implicit addressing type based on said prefix.

6. Method according to any of Claims 3 to 5, wherein the first field (C1) is exclusively made up of the p bits determining the page.

7. Method according to any of Claims 3 to 5, wherein the second field (C2) is exclusively made up of the N-p bits determining the offset.

8. Method according to any of the preceding claims, wherein the same prefix is used for each field.

9. Computer program (P) comprising programming of a DMA controller from a virtual address (A) chosen from a source virtual address and a destination virtual address, having a size of N bits, said computer program being designed to be run in user mode on a system on a chip (1) comprising a central processing unit (2), a memory management unit (5) and a DMA controller (11), said program comprising instructions for implementing the steps of a procedure according to any of the preceding claims.

10. System on a chip (1) comprising:
- a central processing unit (2) designed, when executing in user mode a store instruction (l1, l2) including at least one address argument (A1, A2), to supply the address argument to an address processing block (3) via a first address bus (VA), said system on chip being **characterized in that**
- the address processing block (3) comprises:
- a first module (7) designed to perform processes on address words (A1) having a first prefix value (pref1) encoded on a number of bits strictly greater than 1,
- a memory management unit (5), designed to translate according to a predefined table (T), a virtual address word comprising N bits supplied as input in a corresponding physical address word,
- routing means (4) designed to detect at least the first prefix value (pref1) and a second given prefix value (pref2) encoded on a number of bits strictly greater than 1, in a virtual address word (A1, A2) supplied as input and to supply the address word selectively to an element selected from the memory management unit (5), the first module (7) of the address processing block and a second address bus (BA),
said address processing block (3) being furthermore designed, from a virtual address word (A1) supplied as input and including a prefix presenting the first value, to deliver an address word comprising a prefix presenting the first value and bits obtained following an operation of translation of a virtual address into a corresponding physical address in accordance with the predefined table, the virtual address to be translated being determined at least partly as a function of bits located after said prefix in said virtual address word (A1) supplied as input;
said address translation block furthermore being designed to supply the processed words to the second address bus (BA);
- a DMA controller (11) which comprises a source address register (12), a data address register (14), a size register (15) and a state machine (16), said state machine being designed to detect at least a prefix having the first value (pref1), or a prefix having the second value (pref2), in an address word (A1, A2) made available on the second address bus (BA), and to store in a register chosen from the source register and the destination register, at least bits extracted from a first location in an address word comprising a prefix having the first value, and bits extracted from a second location in an address word comprising a prefix having the second value, said first, or second, location being predefined and located after said respective prefixes.

11. System on a chip (1) according to Claim 10, in which the memory management unit (5) is designed to translate a virtual address word supplied as input into a corresponding physical address word according to a number p of first bits of the virtual address word which determine a page.

12. System on a chip (1) according to Claim 11, in which the state machine (16) of the DMA controller (11) is designed to extract a number p of bits following the prefix of an address word for which said prefix presents the first value (pref1).

13. System on a chip (1) according to Claim 11 or Claim 12, in which the state machine (16) of the DMA controller (11) is designed to extract a number N-p of bits following the prefix of an address word (A2) for which said prefix presents the second value (pref2).

14. System on a chip (1) according to any of Claims 10 to 13, in which the first module (7) comprises first swap means designed to swap the group made up of the first N-p bits of a virtual address word supplied as input with the group made up of the following p bits of said virtual address word, and to supply the resulting virtual address word to the memory management unit (5).

15. System on a chip (1) according to Claim 14, in which the address processing block (3) comprises a second module (8) to which are addressed the physical address words resulting from the translation of corresponding respective virtual address words by the memory management unit (5), said second module comprising means for determining whether a swap has been performed by the first swap means (7) on the virtual address word corresponding to the physical address word as input, and second swap means (9) for swapping the group made up of the first p bits with the group made up of the following N-p bits in a word supplied by the second module in case of determination of a swap by the second module and to make the resulting address word available on the second address bus (BA).

16. System on a chip (1) according to any of Claims 10 to 15, in which the memory management unit (5) and the central processing unit (2) are included in respective components, and at least one element chosen from the first module (7) and the routing means (4) is at least partially integrated in a component chosen from the component comprising the memory management unit and the component comprising the central processing unit.

17. System on a chip (1) according to any of Claims 15 to 16, in which the memory management unit (5) and a third address bus (PA') are included in respective components, and at least one element chosen from the second module (8) and the second swap means (9) is at least partially integrated in a component chosen from the component comprising said third bus and the component comprising the memory management unit (5).

18. System on a chip (1) according to any of Claims 10 to 17, in which the routing means (4) comprise a bypass device designed to supply an address word supplied as input directly to the second address bus (BA) if the second prefix value is detected.

19. System on a chip (1) according to any of Claims 10 to 13, in which the first module (7) of the address processing block (3) comprises a specific memory management unit, and said specific memory management unit is designed, from a virtual address word (A1) supplied as input including a prefix having the first value, to deliver an address word including a prefix having the first value and bits obtained following an operation of translation of the virtual address into a corresponding physical address in accordance with the predefined table (T), the virtual address to be translated being determined at least partly according to predefined bits of said virtual address word supplied as input which are located after said prefix.

20. System on a chip (1) according to any of Claims 10 to 19, in which the state machine (16) of the DMA controller (11) is designed to select the register for storage as a function of at least one item of information (x) applied by the central processing unit (2) to a data bus (BD) linking the DMA controller and the central processing unit (2).

## Patentansprüche

1. Verfahren zur Verarbeitung einer virtuellen Adresse (A) durch einen Prozeß (A), der eine Programmierung eines DMA-Controllers umfaßt und dazu geeignet ist, im Benutzermodus auf einem System auf Chip (1) abzulaufen, das eine Zentraleinheit (2), eine Speicherverwaltungseinheit (5) und einen DMA-Controller (11) aufweist, wobei die virtuelle Adresse eine Adresse unter einer virtuellen Quelladresse und einer virtuellen Zieladresse ist und eine Größe von N Bits hat, wobei das Verfahren **dadurch gekennzeichnet ist, daß** es die folgenden Schritte umfaßt:
- man zerlegt die virtuelle Adresse in wenigstens zwei Felder von Bits (C1, C2):
- man erstellt für jedes Feld ein Adreßwort (A1, A2) von N Bits, das einerseits ein Präfix (pref1, pref2) mit einem gegebenen Wert, das dem Feld zugeordnet ist und eine Anzahl von Bits streng über 1 aufweist, und andererseits das Feld aufweist;
- man führt eine Programmierung des DMA-Controllers mit Hilfe von Speicherungsanweisungen (I1, I2) durch, die für jedes der erstellten Adreßwörter eine Speicherungsanweisung bezüglich des Adreßworts aufweisen.

2. Verfahren nach Anspruch 1, nach welchem die virtuelle Adresse eine Anzahl p von ersten Bits, die eine Seite bestimmen, gefolgt von einer Anzahl N - p Bits aufweist, die eine Verschiebung in der Seite bestimmen.

3. Verfahren nach Anspruch 2, nach welchem man die virtuelle Adresse in zwei Felder (C1, C2) zerlegt, ein erstes Feld der virtuellen Adresse, das wenigstens die p Bits aufweist, welche die Seite bestimmen, und ein zweites Feld der virtuellen Adresse, das wenigstens die N - p Bits aufweist, welche die Verschiebung bestimmen; und nach welchem:
- man ein erstes Adresswort (A1) von N Bits erstellt, das aus einem Präfix mit einem gegebenen ersten Wert (pref1) und dem ersten Feld (C1) besteht;
- man ein zweites Adresswort (A2) von N Bits erstellt, das ein Präfix mit einem gegebenen ersten Wert (pref2) und das zweite Feld (C2) aufweist;
- man eine Programmierung des DMA-Controllers mit Hilfe wenigstens einer ersten Speicherungsanweisung (I1) bezüglich des ersten Adreßworts und einer zweiten Speicherungsanweisung (I2) bezüglich des zweiten Adreßworts durchführt.

4. Verfahren nach Anspruch 2 oder Anspruch 3, nach welchem eine Speicherungsanweisung eine Anweisung ist, welche ein Datenargument (x), das dazu bestimmt ist, auf einen Datenbus (data) gesetzt zu werden, und ein Adressenargument aufweist, das dazu bestimmt ist, auf einen Adressenbus (VA) gesetzt zu werden, und das Adressenargument der Speicherungsanweisung ein Adreßwort (A1, A2), aufweist, das beginnend mit einem der Präfixe (pref1, pref2) erstellt ist und eines der Felder (C1, C2) nach dem Präfix aufweist.

5. Verfahren nach einem der vorhergehenden Ansprüche, nach welchem eine Speicherungsanweisung (I1, I2) bezüglich eines erstellten Adreßworts (A1, A2), welches eines der Präfixe (pref1, pref2) und eines der Felder (C1, C2) aufweist, eine Speicherungsanweisung vom Typ mit implizierter Adressierung auf der Basis des ersten Präfixes ist.

6. Verfahren nach einem der Ansprüche 3 bis 5, nach welchem das erste Feld (C1) ausschließlich aus den p Bits besteht, welche die Seite bestimmen.

7. Verfahren nach einem der Ansprüche 3 bis 5, nach welchem das zweite Feld (C2) ausschließlich aus den N - p Bits besteht, welche die Verschiebung bestimmen.

8. Verfahren nach einem der vorhergehenden Ansprüche, nach welchem man für jedes Feld das gleiche Präfix verwendet.

9. Computerprogramm (P), das eine Programmierung eines DMA-Controllers ausgehend von einer virtuellen Adresse (A) unter einer virtuellen Quelladresse und einer virtuellen Zieladresse mit einer Größe von N Bits aufweist, wobei das Computerprogramm dazu geeignet ist, im Benutzermodus auf einem System auf Chip (1) abzulaufen, das eine Zentraleinheit (2), eine Speicherverwaltungseinheit (5) und einen DMA-Controller (11) aufweist, wobei das Programm Anweisungen aufweist, um die Schritte eines Verfahrens nach einem der vorhergehenden Ansprüche auszuführen.

10. System auf Chip (1), aufweisend:
- eine Zentraleinheit (2), die dazu geeignet ist, bei der Abarbeitung einer Speicherungsanweisung (I1, I2) im Benutzermodus, die wenigstens ein Adressenargument (A1, A2) aufweist, das Adressenargument an einen Adressenverarbeitungsblock (3) über einen ersten Adressenbus (VA) zu liefern, wobei das System auf Chip **dadurch gekennzeichnet ist, daß**
- der Adressenverarbeitungsblock (3) aufweist:
- ein erstes Modul (7), das dazu geeignet ist, Verarbeitungen an Adreßwörtern (A1) mit einem ersten Präfixwert (pref1) zu realisieren, der auf eine Anzahl von Bits streng über 1 codiert ist,
- eine Speicherverwaltungseinheit (5), die dazu geeignet ist, entsprechend einer bestimmten Tabelle (T), ein virtuelles Adreßwort, das N Bits aufweist und am Eingang geliefert wird, in ein entsprechendes physisches Adreßwort zu übersetzen,
- Leitweglenkungsmittel (4), die dazu geeignet sind, wenigstens den ersten Präfixwert (pref1) und einen zweiten Präfixwert (pref2), der auf eine Anzahl von Bits streng über 1 codiert ist, in einem virtuellen Adreßwort (A1, A2) zu erfassen, das am Eingang geliefert wird, und selektiv das Adreßwort an ein Element zu liefern, das aus der Speicherverwaltungseinheit (5), dem ersten Modul (7) des Adressenverarbeitungsblocks und einem zweiten Adressenbus (BA) ausgewählt ist,
wobei der Adressenverarbeitungsblock (3) ferner dazu geeignet ist, ausgehend von einem virtuellen Adreßwort (A1), das am Eingang geliefert wird und ein Präfix mit dem ersten Wert aufweist, am Ausgang ein Adreßwort abzugeben, das ein Präfix mit dem ersten Wert und Bits aufweist, die nach einer Operation der Übersetzung einer virtuellen Adresse in eine entsprechende physische Adresse in Entsprechung zu der bestimmten Tabelle erhalten sind, wobei die zu übersetzende virtuelle Adresse wenigstens teilweise in Abhängigkeit von den Bits bestimmt ist, die hinter dem Präfix in dem am Eingang gelieferten virtuellen Adreßwort (A1) liegen;
wobei der Adressenübersetzungblock ferner dazu geeignet ist, die verarbeiteten Wörter zu dem zweiten Adressenbus (BA) zu liefern;
- einen DMA-Controller (11), der ein Quelladressenregister (12), ein Datenadressenregister (14), ein Größenregister (15) und eine Zustandsmaschine (16) aufweist, wobei die Zustandsmaschine dazu geeignet ist, wenigstens ein Präfix mit dem ersten Wert (pref1) bzw. ein Präfix mit dem zweiten Wert (pref2) in einem Adreßwort (A1, A2) zu erfassen, das auf dem zweiten Adressenbus (BA) zur Verfügung gestellt ist, und in einem Register, das aus dem Quellregister und dem Zielregister gewählt ist, wenigstens Bits, die aus einer ersten Stelle in einem Adreßwort extrahiert sind, das ein Präfix mit dem ersten Wert aufweist, und Bits, die aus einer zweiten Stelle in einem Adreßwort extrahiert sind, das ein Präfix mit dem zweiten Wert aufweist, zu speichern, wobei die erste bzw. die zweite Stelle nach den jeweiligen Präfixen bestimmt und gelegen sind.

11. System auf Chip (1) nach Anspruch 10, bei welchem die Speicherverwaltungseinheit (5) dazu geeignet ist, ein virtuelles Adreßwort, das am Eingang geliefert ist, in Abhängigkeit von einer Anzahl p von ersten Bits des virtuellen Adreßworts, die eine Seite bestimmen, in ein entsprechendes physisches Adreßwort zu übersetzen.

12. System auf Chip (1) nach Anspruch 11, bei welchem die Zustandsmaschine (16) des DMA-Controllers (11) dazu geeignet ist, eine Anzahl p von Bits nach dem Präfix eines Adreßworts zu extrahieren, dessen Präfix den ersten Wert (pref1) aufweist.

13. System auf Chip (1) nach Anspruch 11 oder Anspruch 12, bei welchem die Zustandsmaschine (16) des DMA-Controllers (11) dazu geeignet ist, eine Anzahl N-p von Bits nach dem Präfix eines Adreßworts (A2) zu extrahieren, dessen Präfix den zweiten Wert (pref2) aufweist.

14. System auf Chip (1) nach einem der Ansprüche 10 bis 13, bei welchem das erste Modul (7) erste Permutationsmittel aufweist, die dazu geeignet sind, die Gruppe, die aus den N - p ersten Bits eines virtuellen Adreßworts besteht, das am Eingang geliefert wird, mit der Gruppe zu permutieren, die aus den p folgenden Bits des virtuellen Adreßworts besteht, und das resultierende virtuelle Adreßwort am die Speicherverwaltungseinheit (5) zu liefern.

15. System auf Chip (1) nach Anspruch 14, bei welchem der Adressenverarbeitungsblock (3) ein zweites Modul (8) aufweist, an welches die physischen Adreßwörter adressiert werden, die aus der Übersetzung von jeweiligen entsprechenden virtuellen Adreßwörtern durch die Speicherverwaltungseinheit resultieren, wobei das zweite Modul Mittel aufweist, um zu bestimmen, ob von den ersten Permutationsmitteln (7) eine Permutation an dem ersten virtuellen Adreßwort durchgeführt worden ist, das dem physischen Adreßwort am Eingang entspricht, und zweite Permutationsmittel (9), um die Gruppe, die aus den p ersten Bits besteht, mit der Gruppe, die aus den N - p folgenden in einem Wort zu permutieren, das von dem zweiten Modul im Falle der Bestimmung einer Permutation durch das zweite Modul geliefert wird, und um das resultierende Adreßwort auf dem zweiten Adressenbus (BA) zur Verfügung zu stellen.

16. System auf Chip (1) nach einem der Ansprüche 10 bis 15, bei welchem die Speicherverwaltungseinheit (5) und die Zentraleinheit (2) jeweils in Bauelementen enthalten sind und wenigstens ein Element aus dem ersten Modul (7) und den Leitweglenkungsmitteln (4) wenigstens teilweise in einem Bauelement aus dem Bauelement, welches die Speicherverwaltungseinheit aufweist, und dem Bauelement integriert ist, welches die Zentraleinheit aufweist.

17. System auf Chip (1) nach einem der Ansprüche 15 bis 16, bei welchem die Speicherverwaltungseinheit (5) und ein dritter Adressenbus (PA') jeweils in Bauelementen enthalten sind und wenigstens ein Element aus dem zweiten Modul (8) und den zweiten Permutationsmitteln (9) wenigstens teilweise in einem Bauelement aus dem Bauelement, welches den dritten Bus aufweist, und dem Bauelement integriert ist, welches die Speicherverwaltungseinheit (5) aufweist.

18. System auf Chip (1) nach einem der Ansprüche 10 bis 17, bei welchem die Leitweglenkungsmittel (4) eine Ableitungsvorrichtung aufweisen, die dazu geeignet ist, ein Adreßwort, das am Eingang geliefert wird, im Falle der Erfassung des zweiten Präfixwertes, direkt zu dem zweiten Adressenbus (BA) zu liefern.

19. System auf Chip (1) nach einem der Ansprüche 10 bis 13, bei welchem das erste Modul (7) des Adressenverarbeitungsblocks (3) eine spezifische Speicherverwaltungseinheit aufweist, wobei die spezifische Speicherverwaltungseinheit dazu geeignet ist, ausgehend von einem virtuellen Adreßwort (A1), das am Eingang geliefert wird und ein Präfix mit dem ersten Wert aufweist, ein Adreßwort abzugeben, das ein Präfix mit dem ersten Wert und Bits aufweist, die nach einer Operation der Übersetzung einer virtuellen Adresse in eine entsprechende physische Adresse in Entsprechung zu der bestimmten Tabelle (T) erhalten sind, wobei die zu übersetzende virtuelle Adresse wenigstens teilweise in Abhängigkeit von bestimmten Bits des am Eingang gelieferten virtuellen Adreßworts bestimmt ist, die hinter dem Präfix liegen.

20. System auf Chip (1) nach einem der Ansprüche 10 bis 19, bei welchem die Zustandsmaschine (16) des DMA-Controllers (11) dazu geeignet ist, das Register zur Speicherung in Abhängigkeit von wenigstens einer Information (x) auszuwählen, die von der Zentraleinheit (2) auf einen Datenbus (BD) angelegt wird, der den DMA-Controller und die Zentraleinheit (2) verbindet.
